# DEMANDE DE BREVET EUROPEEN

(11) **EP 1 524 025 A1**
(43) Date de publication de la demande: **20.04.2005**
(21) Numéro de dépôt: 04300675.8
(22) Date de dépôt: 11.10.2004
(51) Int. Cl.: B01D 53/94

(54) **Procédé et installation pour vieillir artificiellement un catalyseur de traitement de gaz d'echappement de véhicule**

(30) Priorité: 17.10.2003 FR 0312167
(71) Demandeur: Renault s.a.s., 92100 Boulogne Billancourt (FR)
(72) Inventeur: PROTAT, Eric, 92300, LEVALLOIS-PERRET (FR); FERNANDEZ, Elise, 91120, PALAISEAU (FR); OUHAYOUN, Laurent, 91400, ORSAY (FR)

(57) **Abrégé**

Le procédé sert à vieillir artificiellement un catalyseur (18) de traitement de gaz d'échappement de véhicule. On fait passer un flux de gaz à travers un corps d'un catalyseur disposé dans un four (4).

## Description

L'invention concerne le vieillissement des catalyseurs de traitement de gaz d'échappement de véhicule.

Les véhicules automobiles sont très fréquemment munis de catalyseurs destinés à traiter les gaz d'échappement provenant du moteur à combustion interne, qu'il s'agisse d'un moteur à essence ou d'un moteur diesel.

Ces catalyseurs font l'objet de tests de la part des constructeurs destinés à vérifier si leur fonctionnement est toujours convenable après une certaine durée d'utilisation. Pour cela, il est utile de vieillir artificiellement les catalyseurs, par exemple pour simuler une utilisation du véhicule sur 80 000 kilomètres qui est la distance de référence utilisée pour contrôler ensuite le niveau de dépollution du catalyseur vieilli.

Pour les moteurs à essence, il existe un cycle défini comme référence et dont les paramètres d'essai (durée, température) sont prévus pour être représentatifs d'un vieillissement sur véhicule en fonction du type de catalyseur. Il existe pareillement un cycle de référence pour le vieillissement des moteurs diesel.

Pour vieillir artificiellement un catalyseur, il est connu de disposer l'ensemble du bloc-moteur du véhicule avec le catalyseur sur un banc d'essai. Une fois en place, le moteur est mis en fonctionnement pendant plusieurs jours pour provoquer le vieillissement du catalyseur. Cette technique a pour inconvénient qu'il faut plusieurs jours pour monter et démonter le catalyseur sur le banc moteur et pour installer le moteur sur le banc puis l'en démonter. De plus, pendant toute la durée des tests de vieillissement, le banc se trouve bloqué alors qu'il pourrait être utilisé de façon plus pertinente pour d'autres tâches. En outre, le suivi de l'essai nécessite d'effectuer des vidanges de l'huile et de faire un contrôle journalier sur le moteur proprement dit. Utiliser un banc moteur pour vieillir un organe de dépollution entraîne qu'une enceinte thermique doit être consacrée exclusivement à cette installation. Il s'ensuit qu'un vieillissement artificiel de catalyseur sur banc moteur coûte près de 10 000 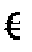 .

Une autre technique consiste à vieillir artificiellement le catalyseur en plaçant l'ensemble du véhicule sur un banc à rouleaux. On utilise alors un cycle dénommé NAM qui permet de générer une thermique suffisante pour le vieillissement du catalyseur. L'inconvénient de cette procédure est son coût très élevé car on utilise le véhicule complet.

Un but de l'invention est de rendre le vieillissement artificiel des catalyseurs moins coûteux à effectuer.

Un autre but de l'invention est d'effectuer le vieillissement artificiel au moyen d'autres dispositifs que les bancs à rouleaux ou les bancs moteurs afin de les libérer pour des opérations plus pertinentes.

A cet effet, on prévoit selon l'invention un procédé pour vieillir artificiellement un catalyseur de traitement de gaz d'échappement de véhicule, dans lequel on fait passer un flux de gaz à travers un corps d'un catalyseur disposé dans un four.

Ainsi, l'utilisation de ce four permet de se dispenser d'utiliser le banc moteur ou le banc à rouleaux et de libérer ces derniers. Le four peut servir au vieillissement artificiel des catalyseurs essence comme des catalyseurs diesel.

Ce procédé permet de réduire le temps nécessaire pour obtenir le vieillissement artificiel. Ainsi, en fonction du type de catalyseur (essence ou diesel) et du type de vieillissement souhaité, la durée nécessaire pour obtenir le vieillissement artificiel variera entre 5 heures et 24 heures. Les temps supplémentaires concernent la montée en température du four (en moyenne 6 heures) et le refroidissement du four jusqu'à la température ambiante (en moyenne 24 heures). Il s'ensuit que le vieillissement du catalyseur peut être obtenu au total en deux jours. De plus, le procédé selon l'invention permet une réduction considérable des opérations de manutention. En effet, il ne faut que quelques minutes pour installer le catalyseur dans le four et programmer le cycle de vieillissement. En comparaison avec les trois jours nécessaires en moyenne sur un banc moteur, il s'avère qu'on peut effectuer deux vieillissements selon l'invention (y compris la manutention) pour un seul vieillissement sur banc moteur (sans la manutention). Par exemple, la durée de préparation d'un test sera ramenée à 45 minutes au lieu de plusieurs jours.

L'invention permet enfin de réduire considérablement les coûts. En effet, le vieillissement au moyen du procédé de l'invention aura un coût ne dépassant pas 2 000 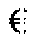 , mis à part l'achat du four et son installation qui seront amortis très rapidement.

En ce qui concerne la surveillance des opérations, il suffit de vérifier que l'écart de températures est dans la plage acceptable par la procédure d'essai. De plus, l'entretien sur le four est réduit. Le four nécessite globalement très peu d'entretien en comparaison avec les vidanges et révisions régulières qu'il fallait mener sur le moteur en cours de vieillissement. Il s'ensuit que l'opérateur peut travailler sur un autre essai pendant qu'un vieillissement est en cours.

Le procédé selon l'invention pourra présenter en outre au moins l'une quelconque des caractéristiques suivantes :
- le corps est porté à une température comprise entre 800°C et 1400°C, de préférence entre 1100°C et 1300°C;
- le gaz comprend au moins deux composants;
- le gaz comprend de l'oxygène;
- le gaz comprend de l'eau;
- le gaz comprend de l'azote;
- le flux de gaz est introduit à une extrémité amont unique du corps;
- l'extrémité amont est une extrémité inférieure du corps:

- le corps étant disposé dans une enceinte du four, le flux de gaz est introduit en continu à une extrémité amont de l'enceinte et sort en continu par une extrémité aval de l'enceinte; et
- le flux est ascendant.

On prévoit également selon l'invention une installation pour vieillir artificiellement un catalyseur de traitement de gaz d'échappement de véhicule, l'installation comprenant :
- un four présentant une enceinte; et
- des moyens pour faire passer un flux de gaz dans l'enceinte.

L'installation selon l'invention pourra présenter en outre au moins l'une quelconque des caractéristiques suivantes :
- elle comprend des moyens pour faire passer le gaz dans un corps de catalyseur disposé dans l'enceinte ;
- elle comprend au moins un adaptateur reliant de façon étanche aux gaz un conduit d'amenée du gaz à une extrémité du catalyseur;
- l'adaptateur a une forme générale conique ou cylindrique ;
- elle comprend au moins deux adaptateurs de formes différentes et/ou de dimensions différentes ;
- l'enceinte présente deux extrémités débouchant à l'extérieur du four ;
- les extrémités s'étendent l'une au-dessus de l'autre ;
- lesdits moyens sont agencés pour introduire le gaz dans l'enceinte à partir d'une extrémité inférieure de l'enceinte ;
- lesdits moyens sont agencés pour introduire au moins deux composants différents dans le gaz ;
- lesdits moyens sont agencés pour commander le débit de chaque composant dans le flux de gaz indépendamment des autres composants ;
- elle comprend au moins deux organes de chauffage associés à des zones respectives différentes de l'enceinte ;
- les zones se font suite suivant une direction de passage du gaz dans l'enceinte ;
- elle comprend des moyens de commande de la température de chaque organe de chauffage indépendant des moyens de commande de la température du ou des autres organes de chauffage ;
- l'enceinte est étanche à l'eau ; et
- elle comprend une hotte d'aspiration du gaz sortant de l'enceinte.

Enfin, on prévoit selon l'invention un catalyseur de traitement de gaz d'échappement de véhicule, qui a fait l'objet d'un vieillissement artificiel au moyen du procédé selon l'invention.

D'autres caractéristiques et avantages de l'invention apparaîtront encore à la lecture de la description suivante d'un mode préféré de réalisation donné à titre d'exemple non limitatif en référence aux dessins annexés sur lesquels :
- la figure 1 est une vue en perspective schématique d'une installation selon l'invention ; et
- la figure 2 est une vue en perspective montrant un modèle d'adaptateur destiné à fonctionner en remplacement de l'adaptateur illustré sur l'installation de la figure 1.

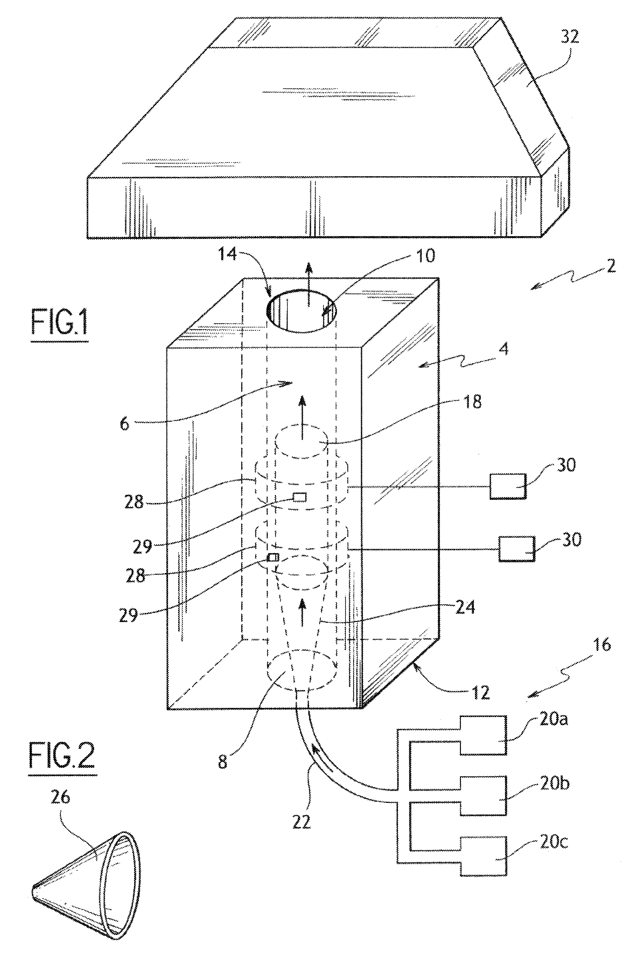

On a illustré aux figures 1 et 2 un mode préféré de réalisation d'une installation pour vieillir artificiellement un catalyseur de traitement de gaz d'échappement d'un moteur à combustion interne de véhicule automobile, que le moteur soit à essence ou diesel.

L'installation 2 comprend un four 4 représenté ici sous la forme d'un parallélépipède rectangle.

Le four comprend une enceinte interne 6 de forme tubulaire et cylindrique. L'enceinte est rectiligne et allongée suivant la direction verticale. Elle présente une forme circulaire en section transversale horizontale. L'enceinte présente une extrémité inférieure 8 et une extrémité supérieure 10 débouchant toutes deux à l'extérieur du four respectivement à des faces planes inférieure 12 et supérieure 14 du four 4. Les extrémités 8 et 10 de l'enceinte s'étendent l'une au-dessus de l'autre. L'enceinte 6 traverse ainsi le four de part en part suivant la direction verticale.

L'installation 2 comprend des moyens 16 pour faire passer un flux de gaz à travers un corps ou monolithe 18 d'un catalyseur disposé dans l'enceinte 6.

Le gaz peut comprendre au moins deux composants. Il en comprend deux dans le cas de l'essence. Il en comprend trois pour le diesel, ce qui est le cas du présent exemple. C'est ainsi que les moyens 16 comprennent ici des débitmètres 20a, 20b, 20c reliés respectivement à des sources d'oxygène, d'azote et d'eau pour commander le débit dans ces trois composants. Les débitmètres sont reliés à une conduite commune 22 acheminant le gaz constitué par le mélange de ces composants jusqu'à l'ouverture inférieure 8 de l'enceinte 6 qui devient ainsi l'ouverture amont. Les débitmètres 20a à 20c permettent de contrôler individuellement les débits de chaque composant de façon à faire varier à volonté leur proportion dans le mélange gazeux introduit dans l'enceinte.

Le corps 18 du catalyseur a ici une forme cylindrique présentant une longueur très inférieure à la longueur de l'enceinte 6 et un diamètre inférieur au diamètre interne de cette enceinte. Durant le test, le corps 18 est disposé co-axialement à l'enceinte, au centre de celle-ci. L'installation 2 comprend un adaptateur 24 de forme générale conique destiné à être raccordé de façon étanche au gaz, d'une part par son extrémité la plus étroite à la conduite 22, et d'autre part par son extrémité la plus large à l'extrémité inférieure amont du corps 18 ayant une forme de disque. Cet agencement permet aux moyens 16 de faire passer le flux de gaz à travers le corps 18 en introduisant le gaz seulement par l'extrémité amont du corps 18. Le terme « amont » est pris ici en référence au sens de déplacement du gaz dans l'enceinte.

L'adaptateur 24 permet en outre de positionner et de maintenir le corps 18 en position dans l'enceinte 6. Il pourra être lui-même supporté par des moyens non illustrés.

L'installation 2 comprendra de préférence plusieurs modèles d'adaptateurs de formes différentes et/ou de dimensions différentes. Ainsi, les catalyseurs peuvent avoir une section transversale de forme cylindrique ou ovale. Les adaptateurs auront donc une section la plus large de forme et/ou de dimension correspondante.

On a ainsi illustré à la figure 2 un modèle d'adaptateur 26 de dimensions différentes mais de même forme générale que l'adaptateur 24. Précisément, l'extrémité étroite de l'adaptateur 26 a la même forme que celle de l'adaptateur 24 pour se raccorder elle aussi au conduit 22. En revanche l'extrémité large a une forme différente adaptée à un autre type de catalyseur.

Le four 4 comprend des moyens de chauffage 28 de l'enceinte 6 permettant de chauffer des zones de l'enceinte se faisant suite suivant la hauteur de l'enceinte. Chacun de ces moyens de chauffage 28 est associé à des moyens de commande 30 en propre, indépendants des moyens de commande des autres moyens de chauffage de façon à permettre de choisir librement la température de chaque zone indépendamment des autres zones. On a illustré à la figure 1 seulement deux moyens de chauffage associés à deux zones respectives mais le nombre de moyens de chauffage différents pourrait être augmenté.

De préférence, on prévoira que l'enceinte 6 est étanche à l'eau de sorte que les moyens de chauffage 28 ne risquent pas d'être détériorés par l'eau acheminée dans le mélange gazeux.

L'installation comprend enfin une hotte 32 disposée au-dessus de l'ouverture supérieure aval 10 du four de façon à aspirer les gaz sortant de cette ouverture.

Le procédé selon l'invention est mis en oeuvre au moyen de cette installation de la façon suivante.

En fonction du modèle de catalyseur devant subir le vieillissement, l'opérateur choisit tout d'abord le modèle d'adaptateur 24 ou 26 convenant pour ce catalyseur. La mise en place de l'adaptateur sur le corps 18 permet de diriger le flux à l'intérieur du corps pour un vieillissement homogène dans le monolithe.

L'opérateur programme ensuite le cycle de chauffe du four et programme de la même manière les débits des différents composants du gaz avec les durées correspondantes. Il fait enfin de même pour l'eau.

Il met ensuite en fonctionnement les moyens de chauffage 28 pour monter la température du four à 1200°C dans le présent exemple.

L'opérateur doit périodiquement contrôler la température dans l'enceinte pour vérifier le bon fonctionnement du système. Le four comprend des capteurs de température 29 disposés à différents endroits de l'enceinte à cette fin.

Au cours du fonctionnement, le gaz est acheminé dans l'enceinte jusqu'à l'extrémité inférieure amont du monolithe. Le gaz chauffé traverse le monolithe 18 également chauffé puis s'échappe par son extrémité aval. Il sort ensuite de l'enceinte par l'extrémité supérieure aval 10 et est aspiré par la hotte 32. Le gaz traverse donc le four 4 en continu suivant un flux qui est en l'espèce vertical et ascendant.

Une fois que le cycle de vieillissement a été effectué et après refroidissement, l'opérateur peut ôter le monolithe 18 du four.

La présence des différents moyens de chauffage 28 permet de régler les températures et surtout les gradients de température sur toute la longueur du tube constituant l'enceinte. Cela assure une meilleure homogénéité dans l'enceinte et une économie de chauffe. Le chauffage se trouve ainsi mieux réglé et mieux utilisé.

Dans le présent exemple, on dispose dans le four seulement le monolithe 18 sans l'enveloppe du catalyseur. Cela permet d'obtenir un meilleur niveau de vieillissement.

L'envoi du mélange gazeux permet de vieillir de manière accélérée le monolithe sur une durée très courte en simulant le passage des gaz d'échappement. On peut ainsi corréler les résultats obtenus avec ceux provenant du test sur banc moteur.

Bien entendu, on pourra apporter à l'invention de nombreuses modifications sans sortir du cadre de celle-ci.

On pourra ainsi modifier la forme et l'agencement de l'enceinte.

## Revendications

1. Procédé pour vieillir artificiellement un catalyseur (18) de traitement de gaz d'échappement de véhicule, **caractérisé en ce qu'**on fait passer un flux de gaz à travers un corps d'un catalyseur disposé dans un four (4).

2. Procédé selon la revendication précédente, **caractérisé en ce que** le corps (18) est porté à une température comprise entre 800°C et 1400°C, de préférence entre 1100°C et 1300°C.

3. Procédé selon l'une quelconque des revendications précédentes, **caractérisé en ce que** le gaz comprend au moins deux composants.

4. Procédé selon l'une quelconque des revendications précédentes, **caractérisé en ce que** le gaz comprend de l'oxygène.

5. Procédé selon l'une quelconque des revendications précédentes, **caractérisé en ce que** le gaz comprend de l'eau.

6. Procédé selon l'une quelconque des revendications précédentes, **caractérisé en ce que** le gaz comprend de l'azote.

7. Procédé selon l'une quelconque des revendications précédentes, **caractérisé en ce que** le flux de gaz est introduit à une extrémité amont unique du corps (18).

8. Procédé selon la revendication précédente, **caractérisé en ce que** l'extrémité amont est une extrémité inférieure du corps (18).

9. Procédé selon l'une quelconque des revendications précédentes, **caractérisé en ce que**, le corps étant disposé dans une enceinte (6) du four, le flux de gaz est introduit en continu à une extrémité amont (8) de l'enceinte et sort en continu par une extrémité aval (10) de l'enceinte.

10. Procédé selon l'une quelconque des revendications précédentes, **caractérisé en ce que** le flux est ascendant.

11. Installation (2) pour vieillir artificiellement un catalyseur de traitement de gaz d'échappement de véhicule, **caractérisé en ce qu'**elle comprend :
- un four (4) présentant une enceinte (6) ; et
- des moyens (16) pour faire passer un flux de gaz dans l'enceinte.

12. Installation selon la revendication précédente, **caractérisée en ce qu'**elle comprend des moyens (16) pour faire passer le gaz dans un corps (18) de catalyseur disposé dans l'enceinte (6).

13. Installation selon l'une quelconque des revendications 11 à 12, **caractérisée en ce qu'**elle comprend au moins un adaptateur (24, 26) reliant de façon étanche aux gaz un conduit (22) d'amenée du gaz à une extrémité d'un catalyseur(18).

14. Installation selon la revendication 13, **caractérisée en ce que** l'adaptateur (24) a une forme générale conique ou cylindrique.

15. Installation selon l'une quelconque des revendications 13 à 14, **caractérisée en ce qu'**elle comprend au moins deux adaptateurs (24, 26) de formes différentes et/ou de dimensions différentes.

16. Installation selon l'une quelconque des revendications 11 à 15, **caractérisée en ce que** l'enceinte (6) présente deux extrémités (8, 10) débouchant à l'extérieur du four (4).

17. Installation selon la revendication 16, **caractérisée en ce que** les extrémités (8, 10) s'étendent l'une au-dessus de l'autre.

18. Installation selon l'une quelconque des revendications 11 à 17, **caractérisée en ce que** lesdits moyens (16) sont agencés pour introduire le gaz dans l'enceinte (6) à partir d'une extrémité inférieure (8) de l'enceinte.

19. Installation selon l'une quelconque des revendications 11 à 18, **caractérisée en ce que** lesdits moyens (16) sont agencés pour introduire au moins deux composants différents dans le gaz.

20. Installation selon la revendication précédente, **caractérisée en ce que** lesdits moyens (16) sont agencés pour commander le débit de chaque composant dans le flux de gaz indépendamment des autres composants.

21. Installation selon l'une quelconque des revendications 11 à 20, **caractérisée en ce qu'**elle comprend au moins deux organes de chauffage (28) associés à des zones respectives différentes de l'enceinte (6).

22. Installation selon la revendication précédente, **caractérisée en ce que** les zones se font suite suivant une direction de passage du gaz dans l'enceinte (6).

23. Installation selon l'une quelconque des revendications 21 à 22, **caractérisée en ce qu'**elle comprend des moyens de commande (30) de la température de chaque organe de chauffage (28) indépendant des moyens de commande de la température du ou des autres organes de chauffage.

24. Installation selon l'une quelconque des revendications 11 à 23, **caractérisée en ce que** l'enceinte (6) est étanche à l'eau.

25. Installation selon l'une quelconque des revendications 11 à 24, **caractérisée en ce qu'**elle comprend une hotte (32) d'aspiration du gaz sortant de l'enceinte (6).

26. Catalyseur de traitement de gaz d'échappement de véhicule, **caractérisé en ce qu'**il a fait l'objet d'un vieillissement artificiel au moyen d'un procédé selon l'une quelconque des revendications 1 à 10.
